# EUROPÄISCHE PATENTSCHRIFT

(11) **EP 2 835 569 B1**
(45) Veröffentlichungstag und Bekanntmachung des Hinweises auf die Patenterteilung: **26.04.2017**
(21) Anmeldenummer: 14179790.2
(22) Anmeldetag: 05.08.2014
(51) Int. Cl.: F16L 41/06

(54) **Vorrichtung zum Wechseln einer Anbohrarmatur**
Device for exchanging a drilling fitting
Dispositif destiné à changer une soupape perçable

(30) Priorität: 09.08.2013 DE 102013108681
(43) Veröffentlichungstag der Anmeldung: 11.02.2015
(73) Patentinhaber: ArmEx Solutions GmbH, 19071 Brüsewitz (DE)
(72) Erfinder: Siemsen, Richard, 22926 Siek (DE)
(74) Vertreter: Jaeschke, Rainer

(56) Entgegenhaltungen:
- DE-A1- 19 615 205
- DE-C1- 4 338 663
- DE-C1- 10 005 334
- US-A- 1 559 442
- US-A1- 2008 196 769

## Beschreibung

Die Erfindung betrifft eine Vorrichtung zum Wechseln einer Anbohrarmatur auf einem unter Druck stehenden Rohr, mit einem Niederhalter, der die zu wechselnde Armatur auf dem Rohr hält, wenn deren Befestigung am Rohr gelöst ist, mit einer an dem Rohr axial festgehaltenen Klemmschelle und mit einer Schubschelle, die über Verstellmittel relativ zu der Klemmschelle axial auf dem Rohr hin- und herverschiebbar ist, welche Schubschelle wenigstens ein oberes und wenigstens ein unteres Druckstück aufweist, die an einer Austauscharmatur angreifen, die zwischen der Schubschelle und der zu wechselnden Armatur auf dem Rohr verschiebbar gehalten ist.

Solche Anbohrarmaturen werden benutzt, um an einem Rohr Anschlussstellen zu schaffen. Sie werden insbesondere benutzt, um Hausanschlüsse mit der in der Straße verlaufenden Rohrleitung für Trinkwasser zu verbinden. Die Anbohrarmaturen umfassen ein Ventil, mit dem der betreffende Anschluss von der Hauptleitung getrennt wird. Die Anbohrarmatur wird durch ein Halteband über einer Durchbrechung in der Rohrwand an dem Rohr gehalten. Zwischen der Rohrwand und dem Aufsetzstutzen mit der Ventilöffnung befindet sich eine Dichtung, die beim Festziehen des Haltebands am Aufsetzstutzen und an der Rohrwand anliegt und die Anschlussstelle abdichtet.

Derartige Anbohrarmaturen unterliegen einem Verschleiß durch Korrosion oder durch Ablagerungen, so dass sie in Zeitabständen gewechselt werden müssen. Hierzu war es bislang erforderlich, die Wasserversorgung in der betreffenden Rohrleitung zu unterbrechen, um die Rohrleitung drucklos zu machen. Durch die Unterbrechung musste zudem nach dem Wechseln eine ausreichende Menge Wasser ungenutzt nachfließen, damit Verunreinigungen ausgespült werden können. Durch die Unterbrechung und die damit verbundenen Vorbereitungen entstehen hohe Kosten. Auch wird de Rohstoff Wasser verschwendet.

Aus der DE 43 38 663 C1 ist eine Vorrichtung der eingangs geschilderten Art bekannt, die es erlaubt, eine Anbohrarmatur an einem unter Druck stehenden Rohr zu wechseln. Es ist eine Schubschelle vorhanden, die über handpumpenbetätigte Hydraulikzylinder axial auf einem Rohr verschiebbar ist. Die Schubschelle drückt gegen die neue Austauscharmatur, die sich zwischen der Schubschelle und der alten zu wechselnden Armatur befindet. Die Hydraulikzylinder stützen sich an einer Klemmschelle ab, die fest mit dem Rohr verspannt ist. Im Zuge des Ausfahrens der Hydraulikzylinder schiebt die neue Armatur die alte Armatur von der Anschlussstelle weg und gelangt anschließend über die Anschlussöffnung. In dieser Lage wird sie mit dem Rohr fest verspannt, so dass eine dichtende Montage der neuen Austauscharmatur möglich ist. Diese Wechselvorrichtung ist nur für eine Art Anbohrarmatur geeignet, da die Schubstelle unmittelbar an der Armatur angreift. Die Klemmschelle weist gelenkig miteinander verbundene Schalen auf.

Aus der DE 100 05 334 C1 ist eine weitere Wechselvorrichtung bekannt, bei der die Schubschelle eine untere Schubschellenschale mit einem Druckstück aufweist, das axial relativ zu der oberen Schubschellenschale einstellbar ist. Dadurch wirkt die Schubschelle sowohl mit dem unteren Haltebügel als auch mit dem oberen Armaturkörper zusammen, so dass ein gleichmäßiges Verschieben der stramm auf dem Rohr sitzenden Armaturen möglich ist. Auch kann die Schubschelle an verschiedene Rohrdurchmesser oder verschiedene Armaturgeometrien angepasst werden.

Beiden Vorrichtungen ist gemeinsam, dass die Schubschelle und die Klemmschelle mehrteilig ausgebildet sind. Die Montage an einem im Erdreich liegenden und freigelegten Rohr ist daher relativ mühselig, zumal unter dem Rohr häufig Wasser oder Schlamm vorhanden ist. Fällt während der Montage eine Spannschraube oder eine Klemmschraube oder ein anderes erforderliches Montageteil in die Grube, muss die Arbeit unterbrochen werden, bis das betreffende Teil wieder gefunden und gereinigt oder ersetzt worden ist. Hierdurch wird die Arbeit erschwert.

Die US 1,559,442 A, US 2008/0196769 A1 und DE 196 15 205 A1 offenbaren jeweils Rohrschellen mit um eine Achse gelenkig miteinander verbundenen Schalen. Diese dienen zur Bildung eines Befestigungspunkts an einem Rohr oder zur Abdichtung eines Rohres.

Der Erfindung liegt die Aufgabe zugrunde, eine Vorrichtung der eingangs geschilderten Art so auszubilden, dass die verschiedenen Bestandteile auf dem Rohr einfacher montiert werden können.

Die Aufgabe wird gemäß der Erfindung dadurch gelöst, dass die Schubschelle eine obere Schubschellenschale und einer untere Schubschellenschale aufweist, die gelenkig um eine parallel neben der Rohrachse verlaufende Achse miteinander verbunden sind derart, dass die Schubschellenschalen zwischen einer Offenstellung und einer Schließstellung gegeneinander verschwenkbar sind, so dass sie in der Offenstellung seitlich über das Rohr passen und in der Schließstellung mit einer Spannschraube auf dem Rohr verschiebbar gehalten sind, an welcher Achse eine weitere Spannschraube gehalten ist, die die obere Schubschellenschale mit der unteren Schubschellenschale unter Bildung eines Scharniers miteinander verbindet. Auch ist es zweckmäßig, wenn die Klemmschelle eine obere Klemmschellenschale und einer untere Klemmschellenschale aufweist, die gelenkig um eine parallel neben der Rohrachse verlaufende Achse miteinander verbunden sind derart, dass die Klemmschellenschalen zwischen einer Offenstellung und einer Schließstellung gegeneinander verschwenkbar sind, so dass sie in der Offenstellung über das Rohr passen und in der Schließstellung mit einer Klemmschraube auf dem Rohr axial fest gehalten sind. Die Schellen können somit seitlich auf das Rohr an jeder beliebigen Stelle aufgesetzt werden.

Dadurch sind die Schubschelle und die Klemmschelle aus zusammenhängenden Teilen gebildet und können in einfacher Weise zunächst um das Rohr gelegt und in dieser Lage an der gewünschten Stelle gehalten werden. Anschließend werden die freien Enden der jeweiligen Schalen durch die Spannschraube beziehungsweise Klemmschraube miteinander verbunden. In dieser Lage ist ein geschlossener Ring vorhanden, der nicht mehr vom Rohr gleiten kann. Ein Verlieren einzelner Teile ist daher nicht mehr zu befürchten. Anschließend werden die Schalen handfest angezogen und in die gewünschte Position gebracht. Dann wird die Schubschelle fest, aber noch verschiebbar angezogen. Die Klemmschelle wird fest mit dem Rohr verspannt. Damit ist die Wechselvorrichtung fertig montiert, und das Austauschen der Armaturen kann durchgeführt werden.

Weiterhin ist es zweckmäßig, wenn die Klemmschraube und/oder die Spannschraube an einer Schale verliersicher gehalten ist und mit ihrem freien Ende mit der jeweils anderen Schale lösbar verbindbar ist. Das freie Ende der Schraube kann als verschwenkbarer Haken ausgebildet sein, der in einen Zapfen oder Vorsprung der jeweils anderen Schale eingreift. Damit besitzt die Wechselvorrichtung keine verlierbaren Kleinteil, so dass eine besonders einfache und sichere Handhabung auf der Baustelle in der Grube möglich ist.

Zweckmäßig ist es zudem, wenn das obere Druckstück axial zur Schubschelle verstellbar ist. Weiterhin ist es günstig, wenn die Höhe des oberen Druckstücks so bemessen ist, dass das Druckstück zwischen dem Rohr und einem vorhandenen Antriebsgehäuse der Austauscharmatur verläuft und an dem dem Rohr zugewandten und die Ventilöffnung aufweisenden Gehäuseabschnitt angreift. Hierdurch kann die Wechselvorrichtung an die inzwischen üblichen Armaturen angepasst werden, die ein seitliches Gehäuseteil für den Ventilantrieb aufweisen. Das Druckstück taucht unter diesem Gehäuseteil hindurch und liegt unmittelbar an dem Aufsetzstutzen an. Ein Beschädigung des Gehäuseteils und eventuell des darin befindlichen Antriebs wird zuverlässig vermieden.

Auch ist es zweckmäßig, wenn das untere Druckstück axial zur Schubschelle verstellbar ist. Damit kann die Schubschelle an unterschiedliche Geometrien der Austauscharmatur angepasst werden. Besonders vorteilhaft ist es, wenn das obere Druckstück und/oder das untere Druckstück über Stellschrauben relativ zur Schubschelle verstellbar sind. Hierdurch wird sichergestellt, dass die Druckstücke an dem Gehäuse der Armatur und an dem Halteband plan anliegen. Ein gleichmäßiges Verschieben der vormontierten Austauscharmatur ist damit möglich.

Weiterhin ist vorgesehen, dass der Niederhalter eine untere Halteschale aufweist, die in der Arbeitslage an dem Halteband oder Haltebügel der zu wechselnden Armatur anliegt und über Stellmittel axial zum unteren Druckstück verstellbar ist. Hierdurch wird erreicht, dass der Haltebügel gemeinsam mit der alten Armatur und der neuen Armatur verschoben wird. Es werden Schräglagen und somit ein Verklemmen des alten Haltebügels mit dem Rohr vermieden. Die Halteschale kann über eine Verstellschraube relativ zur unteren Schubschellenlage verstellbar sein. Hierdurch lässt sich Vorrichtung genau und problemlos an die vor Ort vorhandenen Gegebenheiten anpassen.

Es kann zweckmäßig sein, wenn die Druckstücke auf ihrer dem Rohr zugewandten Unterseite einen dem Rohrdurchmesser angepassten bogenförmigen Verlauf aufweisen. Dadurch bekommen die Druckstücke eine zusätzliche Führung, so dass ein Verrutschen zuverlässig vermieden wird.

Gemäß der Erfindung kann weiterhin vorgesehen werden, dass das obere Druckstück auf seiner dem Rohr abgekehrten Oberseite einen konkaven Verlauf aufweist. Hierdurch baut das obere Druckstück besonders niedrig, so dass es für eine Vielzahl von Armaturen mit seitlichem Gehäuseteil anwendbar ist.

Besonders günstig ist es, wenn die Verstellmittel als motorisch betätigbare Hydraulikzylinder ausgebildet sind. Derartige Hydraulikzylinder arbeiten relativ schnell, so dass der eigentliche Wechselvorgang der Armaturen nur einige Sekunden dauert. Entsprechend niedrig ist der Wasserverlust. Die Hydraulikzylinder greifen jeweils in etwa mittig an den jeweiligen Schubschellen an, so dass ein gleichmäßiges Verschieben der Schubschelle relativ zur Klemmschelle möglich ist.

Weiterhin ist vorgesehen, dass die Klemmschraube der Klemmschellenschalen der Klemmschelle und/oder die Spannschraube der Schubschellenschalen der Schubschelle mit Handschrauben handfest anziehbar sind, um eine Verschiebung auf dem Rohr zu ermöglichen. Das Vorsehen solcher Handschrauben verhindert Fehlbedienungen, die beispielsweise durch ein zu festes Verspannen der Schubschelle mit dem Rohr entstehen können.

Es kann weiterhin ein Kratzblech vorhanden sein, das am Niederhalter zwischen der neuen und der zu wechselnden Armatur eingeklemmt ist und sich schabend über die Rohrwand bewegt. Damit kann die Dichtfläche gut gereinigt werden. Auch kann ein Anschlag auf der der Klemmschelle oder Schubschelle abgekehrten Seite der zu wechselnden Armatur vorgesehen werden. Hierdurch wird der axiale Verschiebeweg der beiden Armaturen begrenzt, so dass die Ventilöffnung der Austauscharmatur genau fluchtend über der Anschlussöffnung im Rohr positioniert werden kann. Ein exaktes Ausrichten der neuen Armatur ist somit in einfacher Weise möglich.

Die Erfindung wird im Folgenden anhand der schematischen Zeichnung näher erläutert. Es zeigen:
- Fig. 1: die Vorrichtung gemäß der Erfindung in der montierten Lage,
- Fig. 2: die Stirnseite der geöffneten Schubschelle und
- Fig. 3: die Stirnseite der geöffneten Klemmschelle.

Die in der Zeichnung dargestellte Vorrichtung zum Wechseln einer alten Anbohrarmatur 11 umfasst einen Niederhalter 12, der die alte Anbohrarmatur 11 auf das Rohr 13 drückt, auch wenn die Befestigungsschrauben des Haltebügels 14 gelöst sind. Der Niederhalter 12 weist hierfür einen Bügel 15 auf, der eine untere Halteschale 16 mit einem oberen Haltearm 17 verbindet. Der Haltearm 17 ist über einen Teller 18 mit der Armatur verbunden. Dadurch wird die alte Anbohrarmatur 11 umgriffen und auf dem Rohr 13 gehalten. Der Abstand des Tellers 18 zur Halteschale 16 kann über eine Stellschraube am Bügel 15 verstellt werden.

Es ist weiterhin eine Schubschelle 19 vorhanden, die axial verschiebbar auf dem Rohr 13 gelagert ist. Im Einzelnen ist die Anordnung so getroffen, dass die Schubschelle 19 eine obere Schubschellenschale 20 und eine untere Schubschellenschale 21 aufweist, die über eine Achse 22 gelenkig miteinander verbunden sind. Die Achse 22 verläuft in der montierten Lage parallel zur Rohrachse. Die Achse 22 wird durch einen Zapfen gebildet, auf dem eine Öse 23 an einem Ende einer Spannschraube 24 gelagert ist. Das andere Ende der Spannschraube 24 ist verliersicher an der oberen Schubschellenschale 20 gehalten. Dadurch wird ein Scharnier gebildet, durch das die Schubschelle in der gezeigten geöffneten Lage seitlich auf das Rohr aufgesetzt werden kann.

Auf der anderen, der Achse 22 gegenüberliegenden Seite der Schubschellenschale, ist eine weitere Spannschraube 25 vorgesehen, die an der oberen Schubschellenschale 20 verliersicher gehalten ist. An ihrem freien Ende weist sie einen Haken 26 auf, der in einen Zapfen 27 eingreift, um die Schubschellenschalen 20, 21 in der geschlossen Lage mit dem Rohr 13 zu verspannen. Da die Schubschelle in der montierten Lage auf dem Rohr axial verschiebbar sein soll, sind die Spannschrauben 24, 25 jeweils mit einem Handrad 28 versehen, so dass die Spannkraft gut einstellbar ist.

In der montierten Lage befindet sich die neue Austauscharmatur 29 neben der zu wechselnden Armatur 11. Es sind ein oberes Druckstück 30 und ein unteres Druckstück 31 vorgesehen, die mit ihren der zu wechselnden Armatur 29 zugewandten Stirnseiten an dem Gehäuse der Armatur beziehungsweise an dem dieser zugeordneten Halteband 32 anliegen. Die Druckstücke 30, 31 sind unabhängig voneinander axial zur Schubschelle verstellbar, so dass die Schubschelle 19 an verschiedene Geometrien der Austauscharmatur anpassbar ist derart, dass die Druckstücke 30, 31 gleichmäßig und plan anliegen. Es ist sind zwei seitliche Stellschrauben 33 vorgesehen, mit dem diese Einstellung stufenlos erfolgen kann.

Die obere Druckstück 30 ist relativ niedrig ausgebildet, so dass es zwischen einem eventuell vorhandenen Gehäuseteil der Austauscharmatur 29 und dem Rohr 13 verläuft und unmittelbar an dem Anschlussflansch 34 der Armatur 29 angreift. Das obere Druckstück 30 kann weiterhin auf seiner Oberseite eine konkave Vertiefung aufweisen, damit es noch niedriger baut. Die in der Zeichnung dargestellte Austauscharmatur 29 weist kein derartiges Gehäuseteil auf, das sich ansonsten über das obere Druckstück 30 erstrecken würde.

Durch diese Maßnahmen wird erreicht, dass die Schubschelle über die Druckstücke 30, 31 sowohl an dem Anschlussflansch der Austauscharmatur 29 als auch an dem Halteband 32 anliegt, so dass diese gleichmäßig und in gleicher Lage zueinander verschiebbar sind.

Weiterhin ist in der unteren Halteschale 16 des Niederhalters 12 ein axial verstellbares Schiebestück 38 vorhanden, das an dem gelösten Haltebügel 14 der alten Armatur 11 angreift. Das Schiebestück 38 ist über eine Verstellschraube 39 axial zum unteren Druckstück 31 und somit zur Schubschelle einstellbar. Die untere Halteschale 16 und insbesondere das Schiebestück 38 werden daher zusammen mit der Schubschelle 19 bewegt, so dass sich die Halteschale 16 zusammen mit dem Niederhalter 12 entsprechend der Bewegung der Schubschelle 19 mit verschoben wird. Sofern der Haltebügel 14 jedoch bei dem Lösen bereits abgefallen ist, bleibt das Schiebestück ohne Funktion. Die zu wechselnde Armatur 11 wird über den Niederhalter 12 dichtend auf der Abzweigöffnung im Rohr 13 gehalten.

Alles in allem wird ein Block aus der Schubschelle 19 und dem Niederhalter 12 gebildet, in welchem Block zum einen die Austauscharmatur 29 und die zu wechselnde Armatur 11 sicher über dem Rohr gehalten werden. Die Schubschelle 19 und der Niederhalter 12 beziehungsweise das Schiebstück 39 sind in axialer Verschieberichtung so miteinander verbunden, dass sich alle Teile zusammen mit der Schubschelle 19 bewegen. Dabei werden auch das untere Halteband 32 und der untere Haltebügel 14 gleichartig und ohne zu verkippen verschoben, so dass sich die jeweilige Halteanordnung 14, 32 der Armaturen 11, 29 nicht verklemmen kann.

Die Austauscharmatur 29 befindet sich in der montierten Lage der Wechselvorrichtung seitlich neben der zu wechselnden Armatur 11. Zwischen den Armaturen 11, 29 ist ein Kratzblech 40 vorhanden, das über seitliche Spannschlösser mit seiner Kratzkante auf der Oberfläche des Rohres 13 anliegt, um den Bereich der Dichtfläche um die Abzweigöffnung zu reinigen. Dies erfolgt im Zuge der Verschiebung des Blocks in Richtung des Pfeils 37.

Wie die Schubschelle 19 axial verschoben wird, ist grundsätzlich beliebig. Es ist hier eine Klemmschelle 41 vorgesehen, die auf der den Armaturen 11, 29 abgekehrten Seite der Schubschelle 19 fest mit dem Rohr 13 verspannt ist. Die Klemmschelle 41 weist eine obere Klemmschale 42 und eine untere Klemmschale 43 auf, die, ähnlich wie bei der Schubschelle 19, gelenkig um eine Schwenkachse 44 miteinander verbunden sind. Die Schwenkachse 44 verläuft in der montierten Lage parallel zur Rohrachse.

Auf der anderen Seite der Klemmschalen ist eine Klemmschraube 45 vorhanden, mit der die Klemmschalen in der geschlossenen Lage fest mit dem Rohr 13 verspannt werden können. Die Klemmschraube 45 und auch die das Gelenk bildende Klemmschraube 46 sind verliersicher an der oberen Klemmschale 42 gehalten. Die eine Klemmschraube 45 weist an ihrem freien Ende einen Haken 47 auf, der mit einem Zapfen 48 in der unteren Klemmschale 43 zusammenwirkt. Die andere Klemmschraube 46 ist mit einer Öse 49 um die Schwenkachse 44 drehbar mit der unteren Klemmschale 43 verbunden.

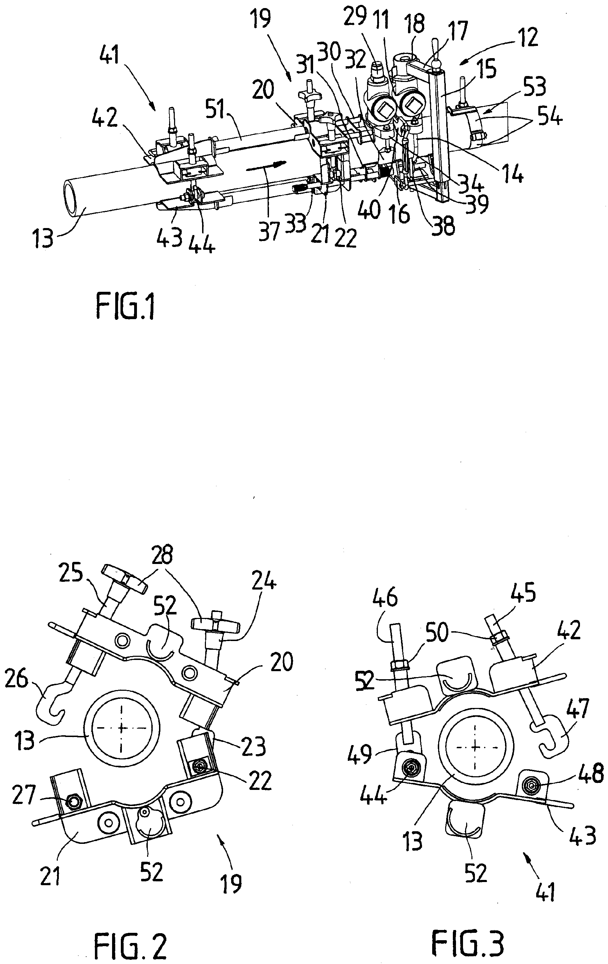

In der in Figur 3 gezeigten geöffneten Lage kann die Klemmschelle seitlich über das Rohr 13 geführt werden. Die Klemmschelle 41 besteht demnach aus zwei zusammenhängenden Teilen, die in einfacher Weise um das Rohr 13 gelegt und dort gehalten werden können, bis der Haken 47 in den Zapfen 48 eingreift. Der dann geschlossene Ring kann in einfacher Weise auf dem Rohr 13 verschoben und ausgerichtet werden. In der gewünschten Lage werden die Klemmschrauben 45, 46 über Schraubenmuttern 50 fest angezogen, um die Klemmschelle axial fest mit dem Rohr 13 zu verspannen.

Die Klemmschelle 41 bildet somit ein Widerlager für die Hydraulikzylinder 51, die zwischen den einander zugekehrten Stirnseiten der Schubschelle 19 und der Klemmschelle 41 angeordnet sind. Hierfür sind entsprechende gegenüberliegende Aufnahmen 52 für den Kolben und den Zylinder an der oberen Schubschellenschale 20 und der zugeordneten oberen Klemmschellenschale 42 beziehungsweise unteren Schubschellenschale 21 und der zugeordneten unteren Klemmschellenschale 43 vorgesehen. Die Hydraulikzylinder 51 sind in etwa mittig zu den Klemmschalen angeordnet, um eine senkrechte Kraft ohne Kippmomente aufbringen zu können.

Auf der der Klemmschelle 41 gegenüberliegenden Seite der Armaturen 11, 29 ist eine Anschlagschelle 53 vorgesehen, die aus zwei verschwenkbaren Schalen 54 besteht, die fest mit dem Rohr 13 verspannt werden. Auch die Anschlagschelle 53 besteht somit aus zusammenhängenden Teilen, so dass sie in einfacher Weise montiert werden kann. Die Anschlagschelle 53 bildet einen Anschlag für die Verschiebebewegung in Richtung des Pfeils 37. Dadurch wird die Verschiebebewegung angehalten, sobald sich die Ventilöffnung im Anschlussflansch 34 exakt über der Abzeigöffnung im Rohr 13 befindet. Dann liegt die vormontierte Dichtung auch dichtend um die Abzweigöffnung am Rohr 13 an, und die Austauscharmatur 29 kann fest mit dem Rohr 13 verspannt werden.

Zum Wechseln der Armatur 11 wird zunächst das Rohr 13 freigelegt, und die Klemmschelle 41 und die Schubschelle 19 werden auf dem Rohr vormontiert. Dann wird der Niederhalter 12 mit der zu wechselnden Armatur 11 verbunden derart, dass dieser die zu wechselnde Armatur fest auf das Rohr drückt. Dann können die Befestigungsbügel 34 entfernt werden.

Anschließend werden das Kratzblech 40 und die Austauscharmatur 29 neben die zu wechselnde Armatur 11 auf das Rohr gesetzt. Das Kratzblech 40 wird fest mit der unteren Halteschale 16 verspannt. Die neue Armatur 29 wird mit einem Halteband 32 handfest, also noch axial verschiebbar, auf dem Rohr verspannt.

Danach oder vorher wird die Schubschelle 19 über die Druckstücke 30, 31 an die Geometrie der neuen Armatur 11 angepasst. Die Schubschelle 19 wird gegen die neue Armatur verschoben und über die Spannschrauben handfest und axial verschiebbar mit dem Rohr verspannt. Dann wird in der entsprechenden Entfernung die Klemmschelle ausgerichtet und nach dem Einlegen der Hydraulikzylinder fest mit dem Rohr verspannt. Auf der gegenüberliegenden Seite wird die Anschlagschelle 53 in dem erforderlichen Abstand fest mit dem Rohr verspannt.

Dann werden die Hydraulikzylinder 51 mit Druck beaufschlagt, so dass sich der gesamte Block aus alter Armatur 11, Kratzblech 40, oberen und unteren Druckstück 30, 31 und Schubstelle in Richtung des Pfeils 37 bis zur Anschlagschelle 53 bewegt. Lediglich beim Übergang des Zwischenraums zwischen den Armaturen 11, 29 tritt etwas Wasser aus der Abzweigöffnung des Rohres aus. Sobald der Anschlussflansch 34 über der Abzweigöffnung sitzt und dort mit dem Rohr verspannt wird, ist die Abzweigstelle dicht.

Die Vorrichtung kann dann entfernt werden. Es ist nicht mehr erforderlich, die Rohrleitung abzusperren und drucklos zu machen. Auch ist die Abzweigstelle sofort einsetzbar. Das Wechseln geht sehr schnell und kann von einer Person durchgeführt werden.

## Patentansprüche

1. Vorrichtung zum Wechseln einer Anbohrarmatur (11) auf einem unter Druck stehenden Rohr (13), mit einem Niederhalter (12), der die zu wechselnde Armatur (11) auf dem Rohr hält, wenn deren Befestigung (34) am Rohr gelöst ist, mit einer an dem Rohr axial festgehaltenen Klemmschelle (41) und mit einer Schubschelle (19), die über Verstellmittel relativ zu der Klemmschelle (41) axial auf dem Rohr hin- und herverschiebbar ist, welche Schubschelle (19) wenigstens ein oberes und wenigstens ein unteres Druckstück (30, 31) aufweist, die an einer Austauscharmatur (29) angreifen, die zwischen der Schubschelle (19) und der zu wechselnden Armatur (11) auf dem Rohr (13) verschiebbar gehalten ist, wobei die Schubschelle (19) eine obere Schubschellenschale (20) und eine untere Schubschellenschale (21) aufweist, **dadurch gekennzeichnet, dass** die obere Schubschellenschale (20) und die untere Schubschellenschale (21) gelenkig um eine parallel neben der Rohrachse verlaufende Achse (22) miteinander verbunden sind derart, dass die Schubschellenschalen (20, 21) zwischen einer Offenstellung und einer Schließstellung gegeneinander verschwenkbar sind, so dass sie in der Offenstellung seitlich über das Rohr (13) passen und in der Schließstellung mit einer Spannschraube (25) auf dem Rohr verschiebbar gehalten sind, an welcher Achse (22) eine weitere Spannschraube (24) gehalten ist, die die obere Schubschellenschale (20) mit der unteren Schubschellenschale (21) unter Bildung eines Scharniers miteinander verbindet.

2. Vorrichtung nach Anspruch 1, **dadurch gekennzeichnet, dass** die Klemmschelle (41) eine obere Klemmschellenschale (42) und einer untere Klemmschellenschale (43) aufweist, die gelenkig um eine parallel neben der Rohrachse verlaufende Achse (44) miteinander verbunden sind derart, dass die Klemmschellenschalen (42, 43) zwischen einer Offenstellung und einer Schließstellung gegeneinander verschwenkbar sind, so dass sie in der Offenstellung über das Rohr passen und in der Schließstellung mit einer Klemmschraube (45) auf dem Rohr (13) axial fest gehalten sind.

3. Vorrichtung nach einem der Ansprüche 1 oder 2, **dadurch gekennzeichnet, dass** die Klemmschraube (45) und/oder die Spannschraube (25) an einer Schale (20, 42) verliersicher gehalten ist und mit ihrem freien Ende (26, 47) mit der jeweils anderen Schale (21, 43) lösbar verbindbar ist.

4. Vorrichtung nach einem der Ansprüche 1 bis 3, **dadurch gekennzeichnet, dass** das obere Druckstück (30) axial zur Schubschelle (19) verstellbar ist.

5. Vorrichtung nach einem der Ansprüche 1 bis 4, **dadurch gekennzeichnet, dass** das untere Druckstück (31) axial zur Schubschelle (19) verstellbar ist.

6. Vorrichtung nach einem der Ansprüche 1 bis 5, **dadurch gekennzeichnet, dass** das obere Druckstück (30) und/oder das untere Druckstück (31) über Stellschrauben (33) axial zur Schubschelle (19) verstellbar sind.

7. Vorrichtung nach einem der Ansprüche 1 bis 6, **dadurch gekennzeichnet, dass** der Niederhalter (12) eine untere Halteschale mit einem Schiebestück (38) aufweist, das in der Arbeitslage an dem Halteband oder Haltebügel (14) der zu wechselnden Armatur (11) anliegt und über Stellmittel axial zum unteren Druckstück (31) verstellbar ist.

8. Vorrichtung nach einem der Ansprüche 1 bis 7, **dadurch gekennzeichnet, dass** die Höhe des oberen Druckstücks (30) so bemessen ist, dass das Druckstück (30) zwischen dem Rohr (13) und einem vorhandenen Antriebsgehäuse der Austauscharmatur (29) verläuft und an dem dem Rohr zugewandten und die Ventilöffnung aufweisenden Gehäuseabschnitt angreift.

9. Vorrichtung nach einem der Ansprüche 1 bis 8, **dadurch gekennzeichnet, dass** die Druckstücke (30, 31) auf ihrer dem Rohr zugewandten Unterseite einen dem Rohrdurchmesser angepassten bogenförmigen Verlauf aufweisen.

10. Vorrichtung nach einem der Ansprüche 1 bis 9, **dadurch gekennzeichnet, dass** das obere Druckstück (30) auf seiner dem Rohr abgekehrten Oberseite einen konkaven Verlauf aufweist.

11. Vorrichtung nach Anspruch 1, **dadurch gekennzeichnet, dass** die Verstellmittel als motorisch betätigbare Hydraulikzylinder (51) ausgebildet sind.

12. Vorrichtung nach einem der Ansprüche 1 bis 11, **dadurch gekennzeichnet, dass** die Klemmschraube der Klemmschellenschalen der Klemmschelle und/oder die Spannschraube (25) der Schubschellenschalen (20, 21) der Schubschelle (19) mit Handschrauben (28) handfest anziehbar sind, um eine Verschiebung auf dem Rohr (19) zu ermöglichen.

## Claims

1. Device for exchanging a drilling fitting (11) on a pressurised pipe (13), having a downholder (12) that holds the fitting (11) to be exchanged on the pipe when the fixture (34) of the fitting (11) on the pipe is removed, having a clamping clip (41) fixed axially on the pipe and having a thrusting clip (19) that is able to be moved axially forwards and backwards relative to the clamping clip (41) by adjusting means, which thrusting clip (19) has at least one upper and at least one lower pressure piece (30, 31) that touch an exchange fitting (29) that is held moveably on the pipe (13) between the thrusting clip (19) and the fitting (11) to be exchanged, wherein the thrusting clip (19) has an upper thrusting clip shell (20) and a lower thrusting clip shell (21), **characterised in that** the upper thrusting clip shell (20) and the lower thrusting clip shell (21) are flexibly connected to each other around an axis (22) running parallel next to the pipe axis in such a way that the thrusting clip shells (20, 21) are able to be pivoted against each other between an open position and a closed position such that, in the open position, they fit laterally across the pipe (13) and, in the closed position, are held moveably on the pipe by a tensioning screw (25), on which axis (22) a further tensioning screw (24) is held, which connects the upper thrusting clip shell (20) to the lower thrusting clip shell (21) by forming a hinge.

2. Device according to claim 1, **characterised in that** the clamping clip (41) has an upper clamping clip shell (42) and a lower clamping clip shell (43) that are flexibly connected to each other around an axis (44) running parallel next to the pipe axis in such a way that the clamping clip shells (42, 43) are able to be pivoted against each other between an open position and a closed position such that, in the open position, they fit laterally across the pipe (13) and, in the closed position, are fixedly held axially on the pipe (13) by a clamping screw (45).

3. Device according to one of claims 1 or 2, **characterised in that** the clamping screw (45) and/or the tensioning screw (25) are held in place on a shell (20, 42) and are able to be detachably connected to the respective other shell (21, 43) with their free end (26, 47).

4. Device according to one of claims 1 to 3, **characterised in that** the upper pressure piece (30) is able to be adjusted axially relative to the thrusting clip (19).

5. Device according to one of claims 1 to 4, **characterised in that** the lower pressure piece (31) is able to be adjusted axially relative to the thrusting clip (19).

6. Device according to one of claims 1 to 5, **characterised in that** the upper pressure piece (30) and/or the lower pressure piece (31) are able to be adjusted axially relative to the thrusting clip (19) by adjusting screws (33).

7. Device according to one of claims 1 to 6, **characterised in that** the downholder (12) has a lower holding shell having a moving piece (38) which, in the operating position, abuts on the holding strap or holding bracket (14) of the fitting (11) to be exchanged and is able to be adjusted axially relative to the lower pressure piece (31) via adjusting means.

8. Device according to one of claims 1 to 7, **characterised in that** the height of the upper pressure piece (30) is measured in such a way that the pressure piece (30) runs between the pipe (13) and a present drive housing of the exchange fitting (29) and touches the housing section that is facing towards the pipe and has the valve opening.

9. Device according to one of claims 1 to 8, **characterised in that** the pressure pieces (30, 31) have a curved course that is adjusted to the pipe diameter on their underside facing towards the pipe.

10. Device according to one of claims 1 to 9, **characterised in that** the upper pressure piece (30) has a concave course on its upper side turned away from the pipe.

11. Device according to claim 1, **characterised in that** the adjusting means are formed as motor-driven hydraulic cylinders (51).

12. Device according to one of claims 1 to 11, **characterised in that** the clamping screw of the clamping clip shells of the clamping clip and/or the tensioning screw (25) of the thrusting clip shells (20, 21) of the thrusting clip (19) are able to be tightened by handscrews (28) to be finger-tight in order to enable moving on the pipe (19).

## Revendications

1. Dispositif permettant de changer un robinet de prise en charge (11) sur un tuyau sous pression comprenant un serre-flan (12) qui maintient le robinet (11) à changer sur le tuyau (13) lorsque sa fixation (34) sur ce tuyau est desserrée, un collier de blocage (41) fixé axialement sur le tuyau et un collier de poussée (19) qui peut coulisser axialement, en va-et-vient sur le tuyau par rapport au collier de blocage (41) par l'intermédiaire de moyens de réglage, ce collier de poussée (19) comprenant au moins une pièce de compression supérieure et au moins une pièce de compression inférieure (30, 31) qui viennent en prise sur un robinet de rechange (29) qui est maintenu mobile en translation sur le tuyau (13) entre le collier de poussée (19) et le robinet (11) à changer, le collier de poussée (19) comprenant une coquille de collier de poussée supérieure (20) et une coquille de collier de poussée inférieure (21), **caractérisé en ce que**
la coquille de collier de poussée supérieure (20) et la coquille de collier de poussée inférieure (21) sont articulées l'une sur l'autre autour d'un axe (22) s'étendant parallèlement à proximité de l'axe du tuyau, de sorte que les coquilles de collier de poussée (20, 21) puissent pivoter l'une par rapport à l'autre entre une position ouverte et une position fermée, pour qu'en position ouverte elles puissent s'emboîter latéralement sur le tuyau (13) et qu'en position fermée elles soient maintenues mobiles en translation sur le tuyau avec une vis de serrage (25), sur l'axe (22) étant maintenue une autre vis de serrage (24) qui relie la coquille de collier de poussée inférieure (21) et la coquille de poussée supérieure (20) en formant une charnière.

2. Dispositif conforme à la revendication 1,
**caractérisé en ce que**
le collier de blocage (41) comporte une coquille de collier de blocage supérieure (42) et une coquille de collier de blocage inférieure (43) qui sont articulées l'une sur l'autre autour d'un axe (44) s'étendant parallèlement et à proximité de l'axe du tuyau de sorte que les coquilles de collier de blocage (42, 43) puissent pivoter l'une par rapport à l'autre entre une position ouverte et une position fermée pour qu'elles puissent s'emboîter sur le tuyau en position ouverte et qu'en position fermée elles soient maintenue rigidement axialement sur le tuyau (13) par une vis de blocage (45).

3. Dispositif conforme à l'une des revendications 1 et 2,
**caractérisé en ce que**
la vis de blocage (45) et/ou la vis de serrage (25) est(sont) maintenue(s) en étant imperdables sur une coquille (20, 42) et peut(peuvent) être reliée(s) de façon amovible par son (leur) extrémité libre (26, 47) avec l'autre coquille respective (21, 43).

4. Dispositif conforme à l'une des revendications 1 à 3,
**caractérisé en ce que**
la pièce de compression supérieure (30) peut être réglée axialement par rapport au collier de poussée (19).

5. Dispositif conforme à l'une des revendications 1 à 4,
**caractérisé en ce que**
la pièce de compression inférieure (31) peut être réglée axialement par rapport au collier de poussée (19).

6. Dispositif conforme à l'une des revendications 1 à 5,
**caractérisé en ce que**
la pièce de compression supérieure (30) et/ou la pièce de compression inférieure (31) peut(vent) être réglée(s) axialement par rapport au collier de poussée (19) par l'intermédiaire de vis de réglage (33).

7. Dispositif conforme à l'une des revendications 1 à 6,
**caractérisé en ce que**
le serre-flan (12) comprend une coquille de retenue inférieure équipée d'une pièce coulissante (38) qui, dans la position de travail, s'appuie sur le collier de retenue ou l'étrier de retenue (14) du robinet (11) à changer et peut être réglée axialement par l'intermédiaire de moyens de réglage, par rapport à la pièce de compression inférieure (31).

8. Dispositif conforme à l'une des revendications 1 à 7,
**caractérisé en ce que**
la hauteur de la pièce de compression supérieure (30) est dimensionnée de sorte que cette pièce de compression (30) s'étende entre le tuyau (13) et un boîtier d'entraînement équipant le robinet de rechange (29) et vienne en prise sur le segment du boîtier tourné vers le tuyau et comportant l'ouverture de soupape.

9. Dispositif conforme à l'une des revendications 1 à 8,
**caractérisé en ce que**
les pièces de compression (30, 31) ont, sur leur face inférieure tournée vers le tuyau, un contour en forme d'arc adapté au diamètre du tuyau.

10. Dispositif conforme à l'une des revendications 1 à 9,
**caractérisé en ce que**
la pièce de compression supérieure (30) est concave, sur sa face supérieure située à l'opposé du tuyau.

11. Dispositif conforme à la revendication 1,
**caractérisé en ce que**
les moyens de réglage sont réalisés sous la forme de cylindres hydrauliques (51) à actionnement motorisé.

12. Dispositif conforme à l'une des revendications 1 à 11,
**caractérisé en ce que**
la vis de blocage des coquilles du collier de blocage et/ou la vis de serrage (25) des coquilles (20, 21) du collier de poussée (19) peut(vent) être tirée(s) à la main avec des vis manuelles (28) pour permettre leur coulissement sur le tuyau (19).
